# EUROPÄISCHE PATENTSCHRIFT

(11) **EP 1 211 492 B1**
(45) Veröffentlichungstag und Bekanntmachung des Hinweises auf die Patenterteilung: **06.08.2008**
(21) Anmeldenummer: 01128022.9
(22) Anmeldetag: 26.11.2001
(51) Int. Cl.: G01G 19/415

(54) **Anordnung zur Überwachung des Füllungsgrades einzelner Behälter in einem Lagersystem**
Arrangement for monitoring the degree of filling of single containers in a storage system
Dispositif pour surveiller le taux de remplissage des récipients dans un système de stockage

(30) Priorität: 04.12.2000 DE 10060147
(43) Veröffentlichungstag der Anmeldung: 05.06.2002
(73) Patentinhaber: SFS Handels Holding AG, CH-9435 Heerbrugg (CH)
(72) Erfinder: Keel, Daniel, 9444 Diepoldsau (CH)

(56) Entgegenhaltungen:
- EP-A- 0 969 272
- DE-C- 357 273
- FR-A- 544 672
- LU-A- 39 011

## Beschreibung

Die Erfindung betrifft eine Anordnung zur Überwachung des Füllungsgrades einzelner Behälter in einem Lagersystem, bei welchem jedem einzelnen Behälter ein von miteinander zusammenwirkenden Hebeln gebildetes Wägesystem zugeordnet ist, wobei die Hebel an zwei einander gegenüber liegenden Endabschnitten der aufliegenden Behälter an den Behältern oder an einer Auflagefläche für die Behälter angreifen und wobei ein dem Wägesystem zugeordnetes Schaltelement ab einer bestimmten Menge des Inhalts eines Behälters einen Schaltvorgang oder einen Steuerbefehl auslöst.

Eine solche Anordnung ist aus der US 5 920 480 A bekannt, auf die weiter unten näher eingegangen wird.

Solche Anordnungen zur Überwachung des Füllungsgrades einzelner Behälter in einem Lagersystem werden eingesetzt, um rechtzeitig einen zu Ende gehenden Lagervorrat eines bestimmten Gegenstandes feststellen zu können oder um eine vollautomatische Lagerbewirtschaftung zu ermöglichen. In der Regel wird diese Überwachung durch Sichtkontrolle ausgeführt oder aber durch komplizierte und teure elektronischen Messvorrichtungen. Insbesondere dann, wenn es um die Lagerhaltung von kleinen Massenteilen wie Schrauben od.dgl. geht, ist es notwendig, eine wirksame Lagerüberwachung durchführen zu können.

Die eingangs erwähnte US 5 920 480 A beschreibt eine Anordnung zum Erkennen eines Vollbeladungszustandes einer Palette, wobei der Vollbeladungszustand durch das Gesamtgewicht von Werkstücken, die auf die Palette aufgebracht werden, erfasst wird. Sobald eine Palette voll beladen ist, wird sie durch eine in Bereitschaft stehende neue Palette ersetzt. Eine solche Anordnung ist mit einer aufwendigen Steuerung versehen und wird beispielsweise bei einer Fertigungsstrasse eingesetzt, bei der Bleche bearbeitet werden. Eine solche Überwachungsanordnung wäre für den Einsatz bei vielen einzelnen Behältern, wie sie beispielsweise für die Lagerhaltung von kleinen Massenteilen erforderlich sind, zu aufwendig.

EP-A-969272 offenbart eine funkgesteuerte Lagerung und einen Behälter, wobei die Anordnung auf elektronische Art gemacht und das Wiegen nur intervallmässig erfolgen wird.

Aufgabe der Erfindung ist es, eine Überwachungsanordnung der eingangs genannten Art zu schaffen, welche in einfacher und robuster Art und Weise bei Lagersystemen einsetzbar ist, wobei eine genaue Lagererfassung trotz kostengünstiger Investitionen möglich sein soll.

Diese Aufgabe wird erfindungsgemäß dadurch gelöst, dass das Wägesystem von zwei miteinander in Wirkverbindung stehenden Lasthebeln gebildet ist, deren eine Enden das vordere oder hintere Ende eines Behälters oder einer für die Abstützung von Behältern vorgesehenen Auflagefläche abstützen und zur Bildung eines Hebelarmes mit Abstand von diesem Abstützbereich gegenüber dem festen Untergrund verschwenkbar aufliegen, dass die beiden anderen Hebelarme der zweiarmigen Lasthebel gegeneinander gerichtet sind, wobei deren Endabschnitte in eine gemeinsame Halterung eingreifen, und dass ein Hebelarm des einen Lasthebels über diese Halterung hinaus verlängert Ist und das Schaltelement im Verschwenkbereich dieser Verlängerung angeordnet ist und bei Unterschreiten einer Mindestmenge des Inhalts eines Behälters einen Schaltvorgang oder einen Steuerbefehl auslöst.

Bei der Anordnung nach der Erfindung wird bei Unterschreiten einer Mindestmenge des Inhalts eines Behälters ein Schaltvorgang oder ein Steuerbefehl ausgelöst. Die erfindungsgemäße Anordnung ist dafür mit einem Wägesystem versehen, das es ermöglicht, für jeden Behälter, der zur Aufnahme von z.B. Massenteilen dient, eine eigene Überwachungsanordnung zu schaffen, um einen zu Ende gehenden Vorrat rechtzeitig anzuzeigen. Es bedarf dabei keiner komplizierten und störungsanfälligen elektronischen Steuerung, sondern eines einfachen Wägesystems, welches bei Unterschreiten eines vorbestimmbaren Gewichts zu einer bestimmten Anzeige direkt vor Ort oder aber auch in einer Kontrollstelle führt oder aber auch direkt eine Nachbestellung auslösen kann. Es sind somit auf einfache Art und Weise alle Wege für eine optimale Lagerbewirtschaftung geöffnet worden.

Es kann daher von einer einfachen konstruktiven Lösung ausgegangen werden, welche auch störungsfrei arbeiten kann. Aufgrund der einfachen Gestaltung können auch die Gestehungskosten niedrig gehalten werden, so dass es ermöglicht wird, jedem einzelnen Behälter eine solche Überwachungsanordnung zuzuordnen. Nur dadurch ist eine optimale Variante geschaffen worden, denn es kann in einfacher Weise jeder Behälter in diesem System für sich getrennt berücksichtigt werden.

Durch die erfindungsgemäßen Maßnahmen ist auch gewährleistet, dass es gleichgültig ist, ob nur in dem einen Behälter mehr im vorderen oder hinteren Bereich entnommen wird, da infolge der Anordnung von zwei Lasthebeln, welche miteinander über die Halterung in Wirkverbindung stehen, immer nur vom Gesamtgewicht des Behälters und somit des Behälterinhaltes ausgegangen wird, und zwar unabhängig davon, wo sich die Waren im Behälter befinden. Es erfolgt also stets eine Gewichtsaufnahme an zwei Endbereichen des Behälters bzw. der Auflagefläche desselben, wobei die dann gegebenenfalls unterschiedlichen Belastungen auf die beiden Lasthebel über die gemeinsame Halterung ausgeglichen wird.

Vorteilhafte Ausgestaltungen der Erfindung bilden die Gegenstände der Unteransprüche.

So wird als eine Ausgestaltung vorgeschlagen, dass die Abstützbereiche der Lasthebel von im wesentlichen im Querschnitt dreieckigen Fortsätzen gebildet sind, welche in nutartige Vertiefungen an der Unterseite der Behälter oder der Auflagefläche, an dem festen Untergrund und an einander gegenüber liegenden Enden eines Ausschnittes der gemeinsamen Halterung eingreifen. Durch diese Maßnahmen ist gewährleistet, dass die erforderliche leichtgängige Wägefunktion der Lasthebel eingehalten werden kann. Selbst geringfügige Gewichtsänderungen in einem Behälter können so ganz genau registriert werden.

Damit eine exakte Halterung und ein genauer Wägevorgang möglich sind, wird weiter vorgeschlagen, dass die nutartigen Vertiefungen an der Unterseite der Behälter oder der Auflagefläche und am festen Untergrund am freien Ende von frei auskragenden Stützschienen ausgebildet sind.

Wenn ferner vorgesehen wird, dass die Stützschienen an der Unterseite der Behälter oder der Auflagefläche und am festen Untergrund sowie die Abstützbereiche der Lasthebel in diesen einander zugewandten Abschnitten über einen Grossteil der Breite eines Behälters oder der Auflagefläche für einen Behälter geführt sind, kann eine optimale Kippsicherheit für die Behälter oder die Auflageflächen der Behälter geschaffen werden. Es kann daher auch eine Leerung des Behälters einseitig links oder rechts von der Zugriffsseite her erfolgen, ohne dass dies auf das Wägeergebnis und somit den auszulösenden Schaltvorgang einen Einfluss hätte.

In diesem Zusammenhang ist es auch vorteilhaft, wenn jeweils der zwischen den Abstützschienen am Untergrund und dem Abstützbereich am Behälter oder der Auflagefläche liegende Hebelarm beider Lasthebel über einen Grossteil der Breite des Behälters bzw. der Abstützfläche geführt ist und die anderen, gegeneinander gerichteten Hebelarme der beiden Lasthebel wesentlich schmaler ausgeführt sind. Für die kippsichere Aufnahme der Behälter und der Auflageflächen derselben ist damit einwandfrei gesorgt. Trotzdem wird aber der für die Kippsicherung unwesentliche Abschnitt der Lasthebel schmaler und daher material- und kostensparender ausgeführt.

Dabei ist es zweckmäßig, wenn das Verhältnis der Breite der beiden Hebelarme jedes Lasthebels größer ist als 5:1.

Weiter wird vorgeschlagen, dass die gemeinsame Halterung als O- oder C-förmiges Profilstück ausgebildet ist, wobei die beiden Hebelarme an einander gegenüberliegenden Innenflächen dieses Profilstückes abgestützt sind. Dadurch kann eine sehr einfache konstruktive Gestaltung für den Ausgleich der Gewichtsbelastungen auf die beiden Lasthebel geschaffen werden. Die beiden gegeneinander gerichteten Hebelarme üben ja Kräfte aus, die nach entgegengesetzten Richtungen wirken. Es ist daher immer eine entsprechender kraftschlüssiger Angriff dieser Hebelarme an der Halterung gewährleistet. Die Halterung bewirkt so eine gegenseitige Abgleichung der Kräfte, um dadurch unterschiedliche Befüllungsgrade der Behälter im vorderen oder rückwärtigen Bereich berücksichtigen zu können.

Im Rahmen der Erfindung ist ferner eine vorteilhafte Ausgestaltung darin zu sehen, dass die Länge der Hebelarme der Lasthebel im Bereich zwischen der Abstützung am Behälter oder der Auflagefläche für den Behälter und der gemeinsamen Halterung bezogen auf die Abstützung am Untergrund annähernd im Verhältnis 1:6 ausgebildet ist, wobei die zur Halterung führenden, schmaleren Hebelarme wesentlich länger ausgeführt sind als die den Behälter oder die Auflagefläche für den Behälter abstützenden Hebelarme. Dadurch kann bei dieser an sich mechanisch wirkenden Überwachungsanordnung ein exaktes Wägen bewirkt werden, da an den Endbereichen der beiden gegeneinander gerichteten sehr langen Hebelarme der Lasthebel wesentlich geringere Kräfte auftreten, die einen besseren Gewichtsausgleich ermöglichen.

Weiter wird vorgeschlagen, dass die Auflagefläche für jeweils einen Behälter als Platte mit nach unten und/oder nach oben abgebogenen Abkantungen ausgeführt ist. Der Auflagefläche wird dadurch eine besondere Stabilität verliehen.

Damit eine optimale Aufnahmemöglichkeit für die Behälter geschaffen wird, ist vorgesehen, dass die Auflagefläche mit einer rutschfesten Oberfläche ausgeführt und/oder mit Markierungsfelder versehen ist, so dass die Behälter definiert auf der Auflagefläche festlegbar sind. An sich hat diese Maßnahme nichts mit dem Wägesystem zu tun, denn auch bei nicht ordnungsgemäßer Auflage von Behältern auf eine Auflagefläche wirkt die erfindungsgemäße Überwachungsanordnung in gleicher Weise optimal. Eine exakte Lagerung und somit auch eine Verschiebesicherung der Behälter ist aber insofern von Vorteil, als dadurch ausgeschlossen werden kann, dass Behälter mit benachbarten Auflageflächen in Wirkverbindung kommen und so zu Störungen führen würden.

Um das Wägesystem der erfindungsgemäßen Überwachungsanordnung auf das Gewicht des Behälters und auch auf das Gewicht der im Behälter zu lagernden Teile abzustimmen, wird vorgeschlagen, dass der mit dem Schaltelement in Wirkverbindung bringbaren Verlängerung des Hebelarmes des einen Lasthebels ein verschiebbares und gegebenenfalls festlegbares Ausgleichsgewicht zugeordnet ist. Es ist dadurch möglich geworden, eine exakte Abstimmung vorzunehmen und weiter die gewünschte Restmenge im Behälter auf den auszulösenden Schaltvorgang abzustimmen.

Ausführungsbeispiele der Erfindung werden im Folgenden unter Bezugnahme auf die Zeichnungen näher erläutert. Es zeigen:

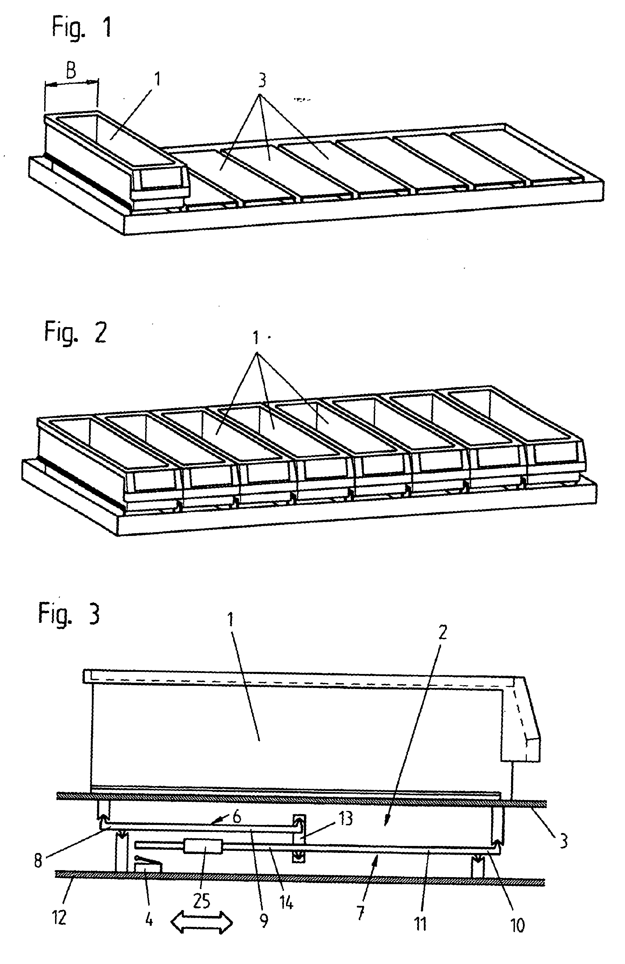

Fig. 1 in Schrägsicht dargestellt einen Bereich eines Lagersystems mit mehreren Auflageflächen für Behälter, wobei ein Behälter aufgesetzt ist;
Fig. 2 in Schrägsicht dargestellt einen Bereich eines Lagersystems mit mehreren Auflageflächen für Behälter, wobei auf alle Auflageflächen Behälter aufgesetzt sind;
Fig. 3 eine Seitenansicht im Bereich eines Behälters teils schematisch dargestellt mit ersichtlichem Wägesystem;
Fig. 4 das Wägesystem schematisch dargestellt in Ansicht von oben;
Fig. 5 eine Seitenansicht im Bereich eines Behälters teils schematisch dargestellt mit dem Wägesystem, wobei die Position des Wägesystem bei einem gefüllten Behälter aufgezeigt ist;
Fig. 6 eine Seitenansicht im Bereich eines Behälters, teils schematisch dargestellt mit dem Wägesystem, wobei die Position des Wägesystems bei fast geleertem Behälter gezeigt ist.

Für eine optimale Lagerhaltung ist auch eine ständige Lagerkontrolle erforderlich, so dass stets mit dem notwendigen Vorlauf auch für den Teilenachschub gesorgt werden kann oder gesorgt wird. Es sollen also immer rechtzeitig jene Behälter, in welchen eine kritische Restmenge unterschritten wird, rechtzeitig aufgefüllt werden. Es soll dabei auch ein variabler Schwellwert festgelegt werden können, der dann ein entsprechendes Signal auslösen muss.

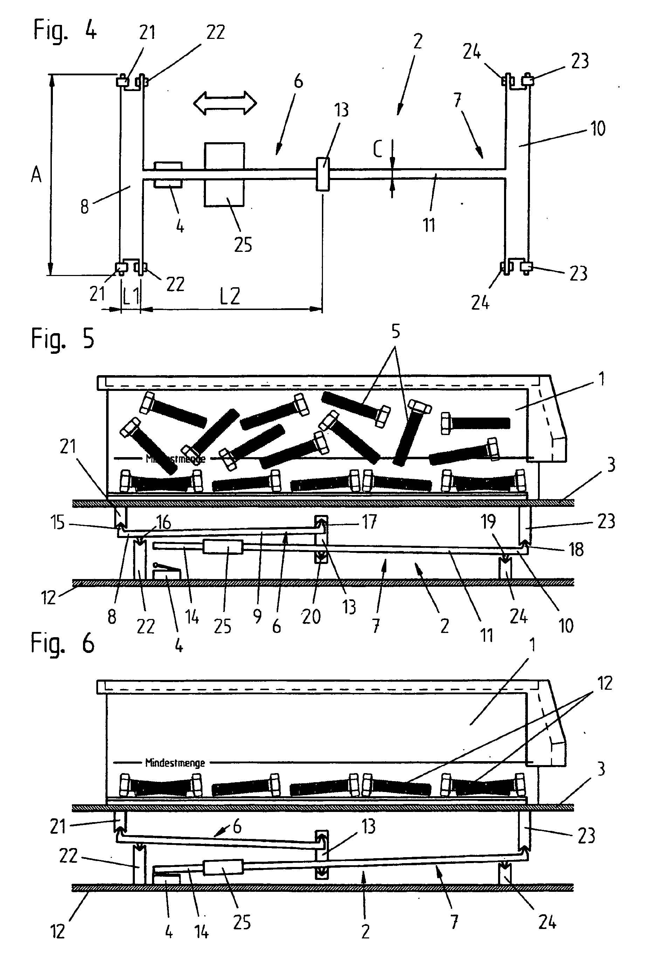

Es wird also eine Anordnung geschaffen, bei welcher jedem einzelnen Behälter 1 ein von miteinander zusammenwirkenden Hebeln gebildetes Wägesystem 2 zugeordnet wird, wobei die Hebel an zwei einander gegenüber liegenden Endabschnitten der aufliegenden Behälter 1 an den Behältern 1 oder an einer Auflagefläche 3 für die Behälter 1 angreifen. Ein dem Wägesystem 2 zugeordnetes Schaltelement 4 löst bei Unterschreiten einer Mindestmenge (siehe Darstellung in Fig. 6) des Inhalts eines Behälters 1 einen Schaltvorgang oder einen Steuerbefehl aus. Bei den Darstellungen in den Zeichnungen sind in den Behältern 1 Schrauben 5 eingelagert. Die erfindungsgemäßen Maßnahmen können selbstverständlich für jede Art von metallischen oder nichtmetallischen Massenteilen oder aber auch für irgendwelche Ersatzteile oder sonstige in einem Lagersystem geordnet aufzubewahrende Teile oder Werkstücke eingesetzt werden. Die erfindungsgemäßen Maßnahmen eignen sich in gleicher Weise für alle möglichen Medien, die in die Behälter 1 einzufüllen und zu lagern sind, so natürlich auch für Flüssigkeiten.

Es wird die Möglichkeit geschaffen, einen zu Ende gehenden Vorrat rechtzeitig anzuzeigen. Es bedarf dabei keiner komplizierten und störungsanfälligen elektronischen Steuerung, sondern eines einfachen Wägesystems 2, welches bei Unterschreiten eines vorbestimmbaren Gewichts zu einer bestimmten Anzeige direkt vor Ort oder aber auch in einer Kontrollstelle führt oder aber auch direkt eine Nachbestellung auslösen kann. Es sind somit auf einfache Art und Weise alle Wege für eine optimale Lagerbewirtschaftung geöffnet worden.

Das Wägesystem 2 wird im wesentlichen von zwei miteinander in Wirkverbindung stehenden Lasthebeln 6 und 7 gebildet. Die einen Enden dieser Lasthebel 6 und 7, also die beiden Hebelarme 8 und 10 stützen das vordere oder hintere Ende eines Behälters 1 oder eine für die Abstützung von Behältern 1 vorgesehene Auflagefläche 3 ab. Zur Bildung der Hebelarmes 8 und 10 liegen die Lasthebel 6 und 7 mit Abstand von ihrem Abstützbereich am Behälter 1 oder der Auflagefläche 3 am festen Untergrund 12 verschwenkbar auf. Die beiden anderen Hebelarme 9 und 11 der zweiarmigen Lasthebel 6 und 7 sind gegeneinander gerichtet, wobei deren Endabschnitte in eine gemeinsame Halterung 13 eingreifen, welche einen Gewichtsausgleich schafft. Ein Hebelarm 11 des einen Lasthebels 7 ist über diese Halterung 13 hinaus verlängert. Die jedem Behälter zugeordneten Schaltelemente 4 sind im Verschwenkbereich dieser Verlängerung 14 angeordnet. Es ist somit ermöglicht worden, jedem einzelnen Behälter eine solche Überwachungsanordnung zuzuordnen.

Die Abstützbereiche der Lasthebel 6 und 7 sind von im wesentlichen im Querschnitt dreieckigen Fortsätzen 15 bis 20 gebildet, welche in nutartige Vertiefungen an der Unterseite der Behälter 1 oder der Auflagefläche 3, an dem festen Untergrund 12 und an einander gegenüber liegenden Enden eines Ausschnittes der gemeinsamen Halterung 13 eingreifen. Anstelle der im Querschnitt dreieckigen Fortsätze können auch Fortsätze mit anderem Querschnitt eingesetzt werden. Es bedarf lediglich einer möglichst reibungsfreien und exakt ausgerichteten Abstützung, damit eine genaue Wägefunktion nicht behindert wird.

Diese nutartigen Vertiefungen sind vorteilhaft sowohl an der Unterseite der Behälter 1 oder der Auflagefläche 3 und am festen Untergrund 12 am freien Ende von frei auskragenden Stützschienen 21, 22, 23, 24 ausgebildet. Die Stützschienen 21 bis 24 und somit auch die Abstützbereiche der Lasthebel 6 und 7 in diesen einander zugewandten Abschnitten sind über einen Grossteil der Breite B eines Behälters 1 oder der Auflagefläche 3 für einen Behälter 1 geführt, um dadurch eine optimale Kippsicherheit für die Behälter 1 zu schaffen. Dazu trägt auch die konstruktive Maßnahme bei, den zwischen den Abstützschienen 22, 24 am Untergrund 13 und den Abstützschienen 21, 23 am Behälter 1 oder der Auflagefläche 3 liegenden Hebelarm 8 bzw. 10 beider Lasthebel 6 und 7 über einen Grossteil der Breite B des Behälters 1 bzw. der Abstützfläche 3 zu führen. Die anderen, gegeneinander gerichteten Hebelarme 9 und 11 der beiden Lasthebel 6 und 7 sind wesentlich schmaler ausgeführt. Für die kippsichere Aufnahme der Behälter 1 und der Auflageflächen 3 derselben ist damit einwandfrei gesorgt. Dabei ist es zweckmäßig, wenn die Breite A der beiden Hebelarme 8 und 10 jedes Lasthebels 6 und 7 mehr als fünfmal so groß ist wie die Breite C der Hebelarme 9 und 11. Die Abstützschienen 21 und 23, aber auch die Abstützschienen 22 und 24 müssen, wie dies auch aus Fig. 4 entnommen werden kann, keineswegs über die ganze Breite B eines Behälters 1 oder der Auflagefläche 3 durchgehend ausgeführt sein. Auch die im Querschnitt dreieckigen Fortsätze 15, 16, 18, 19 müssen nicht über die ganze Breite A des Hebelarmes 8 bzw. 10 durchgehend ausgeführt sein. Es bedarf lediglich einer Abstützung in einem entsprechendem Abstand, damit eine Kippsicherheit erreicht wird.

Die gemeinsame Halterung 13 ist als O- oder C-förmiges Profilstück ausgebildet. Die beiden Hebelarme 9 und 11 sind an einander gegenüberliegenden Innenflächen dieses Profilstückes abgestützt sind. Die beiden gegeneinander gerichteten Hebelarme üben Kräfte aus, die nach entgegengesetzten Richtungen wirken. Es ist daher ein kraftschlüssiger Angriff dieser Hebelarme 9 und 11 an der Halterung 13 gewährleistet. Die Halterung 13 ist in der Mitte zwischen den beiden Stützschienen 21 und 23 bzw. 22 und 24 angeordnet, so dass ein optimaler Abgleich der Gewichtsbelastung von beiden Lasthebeln her möglich ist.

Die Länge L1 bzw. L2 der Hebelarme 8 und 9 bzw. 10 und 11 der Lasthebel 6 und 7 im Bereich zwischen der Abstützung am Behälter 1 oder der Auflagefläche 3 für den Behälter 1 und der gemeinsamen Halterung 13 ist bezogen auf die Stützschienen 22 und 24 zur Abstützung am Untergrund 12 annähernd im Verhältnis 1:6 ausgeführt. Die zur Halterung 13 führenden, schmaleren Hebelarme 9 und 11 sind somit wesentlich länger ausgeführt als die den Behälter 1 oder die Auflagefläche 3 für den Behälter 1 abstützenden Hebelarme 8 und 10.

Um das Wägesystem 2 der erfindungsgemäßen Überwachungsanordnung auf das Gewicht des Behälters 1 und auch auf das Gewicht der im Behälter 1 zu lagernden Teile (z.B. der Schrauben 5) abzustimmen, ist der mit dem Schaltelement 4 in Wirkverbindung bringbaren Verlängerung 14 des Hebelarmes 11 des einen Lasthebels 7 ein verschiebbares und gegebenenfalls festlegbares Ausgleichsgewicht 25 zugeordnet. Dadurch ist eine exakte Abstimmung vorzunehmen und weiter die gewünschte Restmenge im Behälter 1 auf den auszulösenden Schaltvorgang abzustimmen.

Die Auflagefläche 3 für jeweils einen Behälter 1 kann als Platte mit nach unten und/oder nach oben abgebogenen Abkantungen ausgeführt sein. Es wäre auch denkbar, zwischen den Auflageflächen 3 für einzelne Behälter 1 Stege einzusetzen, die ein seitliches Verschieben von auf eine benachbarte Auflagefläche 3 aufgesetzten Behältern 1 verhindern würden. Solche Stege könnten auch leicht entfernbar angeordnet werden. Ferner kann die Auflagefläche 3 mit einer rutschfesten Oberfläche, beispielsweise mit einer Riffelung oder einer rutschfesten Beschichtung, ausgeführt und/oder mit Markierungsfeldern versehen sein, so dass die Behälter 1 definiert auf der Auflagefläche 3 festlegbar sind.

In der vorstehenden Beschreibung ist von relativ schmalen Behältern 1 die Rede, welche auf entsprechend breiten Auflageflächen 3 abgestützt sind. Im Rahmen der Erfindung wäre es auch denkbar, breitere Behälter 1 vorzusehen, die dann mehr als eine Auflagefläche 3 benötigen, um eingesetzt werden zu können. Ein solcher Behälter 1 liegt dann auf zwei oder mehr als zwei Auflageflächen 3 auf. Bei einer solchen Benützung der Überwachungsanordnung könnten dann die Wägesysteme 2 zweier oder mehrerer Auflageflächen auf beliebige Art miteinander in Wirkverbindung gebracht werden. Beispielsweise könnten die Halterungen 13 der einzelnen Wägesysteme miteinander gekuppelt werden. Es wäre aber auch denkbar, dass jedes Wägesystem für sich wirksam erhalten bleibt, da auch dann gewährleistet ist, dass ein effektiver Schaltvorgang erst ausgelöst wird, wenn beide oder eben alle hier wirksamen Schaltelemente 4 betätigt worden sind.

## Patentansprüche

1. Anordnung zur Überwachung des Füllungsgrades einzelner Behälter in einem Lagersystem, bei welchem jedem einzelnen Behälter (1) ein von miteinander zusammenwirkenden Hebeln gebildetes Wägesystem (2) zugeordnet ist, wobei die Hebel an zwei einander gegenüber liegenden Endabschnitten der aufliegenden Behälter (1) an den Behältern (1) oder an einer Auflagefläche (3) für die Behälter (1) angreifen und wobei ein dem Wägesystem (2) zugeordnetes Schaltelement (4) ab einer bestimmten Menge des Inhalts eines Behälters (1) einen Schaltvorgang oder einen Steuerbefehl auslöst, **dadurch gekennzeichnet, dass** das Wägesystem (2) von zwei miteinander in Wirkverbindung stehenden Lasthebeln (6, 7) gebildet Ist, deren eine Enden das vordere oder hintere Ende eines Behälters (1) oder einer für die Abstützung von Behältern (1) vorgesehenen Auflagefläche (3) abstützen und zur Bildung eines Hebelarmes (8, 10) mit Abstand von diesem Abstützbereich gegenüber dem festen Untergrund (12) verschwenkbar aufliegen, dass die beiden anderen Hebelarme (9, 11) der zweiarmigen Lasthebel (6, 7) gegeneinander gerichtet sind, wobei deren Endabschnitte in eine gemeinsame Halterung (13) eingreifen, und dass ein Hebelarm (11) des einen Lasthebels (7) über diese Halterung (13) hinaus verlängert ist und das Schaltelement (4) im Verschwenkbereich dieser Verlängerung (14) angeordnet ist und bei Unterschreiten einer Mindestmenge des Inhalts eines Behälters (1) einen Schaltvorgang oder einen Steuerbefehl auslöst.

2. Anordnung nach Anspruch 1, **dadurch gekennzeichnet, dass** die Abstützbereiche der Lasthebel (6, 7) von im wesentlichen im Querschnitt dreieckigen Fortsätzen (15 bis 20) gebildet sind, welche in nutartige Vertiefungen an der Unterseite der Behälter (1) oder der Auflagefläche (3), an dem festen Untergrund (12) und an einander gegenüber liegenden Enden eines Ausschnittes der gemeinsamen Halterung (13) eingreifen.

3. Anordnung nach Anspruch 2, **dadurch gekennzeichnet, dass** die nutartigen Vertiefungen an der Unterseite der Behälter (1) oder der Auflagefläche (3) und am festen Untergrund (12) am freien Ende von frei auskragenden Stützschienen (21 bis 24) ausgebildet sind.

4. Anordnung nach Anspruch 3, **dadurch gekennzeichnet, dass** die Stützschienen (21 bis 24) an der Unterseite der Behälter (1) oder der Auflagefläche (3) und am festen Untergrund (12) sowie die Abstützbereiche der Lasthebel (6, 7) in diesen einander zugewandten Abschnitten über einen Grossteil der Breite (B) eines Behälters (1) oder der Auflagefläche (3) für einen Behälter (1) geführt sind.

5. Anordnung nach einem der Ansprüche 1 bis 4, **dadurch gekennzeichnet, dass** jeweils der zwischen den Abstützschienen (21 bis 24) am Untergrund (12) und dem Abstützbereich am Behälter (1) oder der Auflagefläche (3) liegende Hebelarm (8, 10) beider Lasthebel (6, 7) über einen Grossteil der Breite (B) des Behälters (1) bzw. der Abstützfläche (3) geführt ist und die anderen, gegeneinander gerichteten Hebelarme (9, 11) der beiden Lasthebel (6, 7) wesentlich schmaler ausgeführt sind.

6. Anordnung nach Anspruch 5, **dadurch gekennzeichnet, dass** das Verhältnis der Breite (A:C) der beiden Hebelarme (8 und 9, 10 und 11) jedes Lasthebels (6, 7) grösser ist als 5:1.

7. Anordnung nach einem der Ansprüche 2 bis 6, **dadurch gekennzeichnet, dass** die gemeinsame Halterung (13) als O- oder C-förmiges Profilstück ausgebildet ist, wobei die beiden Hebelarme (9, 11) an einander gegenüberliegenden Innenflächen dieses Profilstückes abgestützt sind.

8. Anordnung nach einem der vorstehenden Ansprüche, **dadurch gekennzeichnet, dass** die Länge (L1, L2) der Hebelarme (8, 9, 10, 11) der Lasthebel (6, 7) im Bereich zwischen der Abstützung am Behälter (1) oder der Auflagefläche (3) für den Behälter (1) und der gemeinsamen Halterung.(13) bezogen auf die Abstützung am Untergrund (12) annähernd im Verhältnis 1:6 ausgebildet ist, wobei die zur Halterung (13) führenden, schmaleren Hebelarme (9, 11) wesentlich länger ausgeführt sind als die den Behälter (1) oder die Auflagefläche (3) für den Behälter (1) abstützenden Hebelarme (8, 10).

9. Anordnung nach einem der Ansprüche 1 bis 8, **dadurch gekennzeichnet, dass** die Auflagefläche (3) für jeweils einen Behälter (1) als Platte mit nach unten und/oder nach oben abgebogenen Abkantungen ausgeführt ist.

10. Anordnung nach Anspruch 9, **dadurch gekennzeichnet, dass** die Auflagefläche (3) mit einer rutschfesten Oberfläche ausgeführt und/oder mit Markierungsfelder versehen ist, so dass die Behälter (1) definiert auf der Auflagefläche (3) festlegbar sind.

11. Anordnung nach einem der Ansprüche 1 bis 10, **dadurch gekennzeichnet, dass** der mit dem Schaltelement (4) in Wirkverbindung bringbaren Verlängerung (14) des Hebelarmes (11) des einen Lasthebels (7) ein verschiebbares und gegebenenfalls festlegbares Ausgleichsgewicht (25) zugeordnet ist.

## Claims

1. An assembly for monitoring the filling level of individual containers in a storage system, in which a weighing system (2) formed by mutually co-operating levers is assigned to each individual container (1), wherein the levers engage on the containers (1) or on a supporting surface (3) for the containers (1) at two mutually opposed end portions of the containers (1) supported thereon, and wherein from a given amount of the contents of a container (1) a switching element (4) associated with the weighing system (2) triggers a switching procedure or a control command, **characterised in that** the weighing system (2) is formed by two load levers (6,7) which are in operative connection with one another and one end of which support the front end or rear end of a container (1) or a supporting surface (3) provided for the support of containers (1), and which are pivotably supported so as to form a lever arm (8,10) spaced apart from this supporting zone relative to the fixed substructure (12), **in that** the two other lever arms (9,11) of the two-armed load lever (6,7) are directed towards one another, wherein their end portions engage in a common mounting (13), and **in that** one lever arm (11) of one load lever (7) is extended beyond this mounting (13) and the switching element (4) is disposed in the pivoting range of this extension (14) and triggers a switching procedure or a control command if the contents of a container (1) fall short of a minimum quantity.

2. An assembly according to Claim 1, **characterised in that** the supporting zones of the load levers (6,7) are formed by extensions (15 to 20) of substantially triangular cross-section, which engage in groove-like recesses on the underside of the containers (1) or of the supporting surface (3), on the fixed substructure (12) and on mutually opposed ends of a cut-out of the common mounting (13).

3. An assembly according to Claim 2, **characterised in that** the groove-like recesses on the underside of the containers (1) or of the supporting surface (3) and on the fixed substructure (12) are formed at the free end of freely projecting support rails (21 to 24).

4. An assembly according to Claim 3, **characterised in that** the support rails (21 to 24) are guided on the underside of the containers (1) or of the supporting surface (3) and on the fixed substructure (12), and the supporting zones of the load levers (6,7) are guided in these mutually facing portions over the majority of the width (B) of a container (1) or of the supporting surface (3) for a container (1) .

5. An assembly according to any one of Claims 1 to 4, **characterised in that** the respective lever arm (8,10) of both load levers (6,7) situated between the support rails (21 to 24) is guided on the substructure (12) and on the supporting zone on the container (1) or on the supporting surface (13) over the majority of the width (B) of a container (1) or of the supporting surface (3), and the other lever arms (9,11) of the two load levers (6,7) directed towards one another are designed to be substantially narrower.

6. An assembly according to Claim 5, **characterised in that** the ratio of the width (A:C) of the two lever arms (8 and 9, 10 and 11) of each load lever (6,7) is higher than 5:1.

7. An assembly according to any one of Claims 2 to 6, **characterised in that** the common mounting (13) is in the form of an O-shaped or C-shaped profile member, wherein the two lever arms (9,11) are supported on mutually opposed inner surfaces of this profile member.

8. An assembly according to any one of the preceding Claims, **characterised in that** the length (L1,L2) of the lever arms (8,9,10,11) of the load levers (6,7) in the zone between the support on the container (1) or the supporting surface (3) for the container (1) and the common mounting (13) in relation to the support on the substructure (12) is approximately in a ratio of 1:6, wherein the narrow lever arms (9,11) leading to the mounting (13) are substantially longer than the lever arms (8,10) supporting the container (1) or the supporting surface (3) for the container (1).

9. An assembly according to any one of Claims 1 to 8, **characterised in that** the supporting surface (3) for each container (1) is in the form of a plate with downwardly and/or upwardly bent bevels.

10. An assembly according to Claim 9, **characterised in that** the supporting surface (3) is formed with a slip-resistant surface and/or is provided with marking panels so that the containers (1) can be located in a well-defined manner on the supporting surface (3).

11. An assembly according to any one of Claims 1 to 10, **characterised in that** a displaceable and optionally locatable counterweight (25) is associated with the extension (14) of the lever arm (11) of one load lever (7), which can be brought into operative connection with the switching element (4).

## Revendications

1. Dispositif pour contrôler le taux de remplissage des différents réceptacles d'un système de stockage, selon lequel, à chaque réceptacle (1), séparé, est associé un système de pesée (2) formé par des leviers coopérant,
les leviers s'appliquant sur deux segments d'extrémité opposés des réceptacles (1) en appui, en venant contre les réceptacles (1) ou une surface de support (3) des réceptacles (1), et
un élément de commutation (4) associé au système de pesée (2) déclenche une opération de commutation ou un ordre lorsque le contenu dans le réceptacle (1) a atteint une certaine quantité,
**caractérisé en ce que**
le système de pesée (2) est formé par deux leviers de charge (6, 7) coopérant, dont une extrémité soutient l'extrémité avant ou l'extrémité arrière d'un réceptacle (1) ou d'une surface de support (3) recevant le réceptacle (1), et ces leviers s'appuyant de manière pivotante sur une base fixe (12) à distance de la zone de support pour former un bras de levier (8, 10),
les deux autres bras (9, 11) des leviers de charge (6, 7) à deux bras, étant tournés l'un vers l'autre,
les segments d'extrémité de ces bras de levier étant munis d'un moyen de fixation commun (13), et
un bras (11) de l'un des leviers de charge (7) dépasse du moyen de fixation (13) et l'élément de commutation (4) se trouve dans la plage de pivotement de ce prolongement (14) et lorsqu'on passe en dessous d'une quantité minimale du contenu d'un réceptacle (1), une opération de commutation ou un ordre sont déclenchés.

2. Dispositif selon la revendication 1,
**caractérisé en ce que**
les zones d'appui des leviers de charge (6, 7) sont formées par des prolongements (15-20) ayant pratiquement une section de forme triangulaire venant dans des cavités en forme de rainures de la face inférieure des réceptacles (1) ou de la surface de support (3), contre la base fixe (12) et pénètrent par les extrémités opposées, dans une découpe du moyen de fixation commun (13).

3. Dispositif selon la revendication 2,
**caractérisé en ce que**
les cavités en forme de rainures de la face inférieure du réceptacle (1) ou de la surface de support (3) et de la base fixe (12) sont réalisées à l'extrémité libre de rails de support (21-24) venant en saillie.

4. Dispositif selon la revendication 3,
**caractérisé en ce que**
les rails de support (21-24) sont prévus sur la face inférieure des réceptacles (1) ou de la surface de support (3) et sur la base fixe (12) ainsi que dans la zone d'appui des leviers de charge (6, 7) s'étendent sous la forme de segments tournés l'un vers l'autre sur une grande partie de la largeur (B) d'un réceptacle (1) ou de la surface de support (3) d'un réceptacle (1).

5. Dispositif selon l'une quelconque des revendications 1 à 4,
**caractérisé en ce que**
le bras de levier (8, 10) qui se trouve respectivement entre les rails d'appui (21-24) de la base fixe (12) ou de la zone d'appui du réceptacle (1) ou de la surface d'appui (3) pour les deux leviers de charge (6, 7) s'étendent sur une grande partie de la largeur (B) du réceptacle (1) ou de la surface de support (3), et les autres bras de levier (9, 11) des deux leviers de charge (6, 7) dirigés l'un vers l'autre sont beaucoup plus étroits.

6. Dispositif selon la revendication 5,
**caractérisé en ce que**
le rapport des largeurs (A:C) des deux bras de leviers (8 et 9, 10 et 11) de chaque levier de charge (6, 7) est supérieur à 5:1.

7. Dispositif selon l'une quelconque des revendications 2 à 6,
**caractérisé en ce que**
le moyen de fixation commun (13) est une pièce de profil à section en O ou en C et les deux bras de levier (9, 11) sont appuyés contre les surfaces intérieures opposées l'une à l'autre de cette pièce de profil.

8. Dispositif selon l'une quelconque des revendications précédentes,
**caractérisé en ce que**
la longueur (L1, L2) des bras de levier (8, 9, 10, 11) des leviers de charge (6, 7) dans la zone située entre l'appui contre le réceptacle (1) ou la surface de support (3) du réceptacle (1) et le moyen de fixation commun (13), rapporté à l'appui contre la base fixe (12) correspond sensiblement à un rapport 1:6, les bras de levier (9, 11) étroits, allant vers le moyen de fixation (13) étant beaucoup plus long que les bras de levier (8, 10) soutenant le réceptacle (1) ou la surface d'appui (3) du réceptacle (1).

9. Dispositif selon l'une quelconque des revendications 1 à 8,
**caractérisé en ce que**
la surface d'appui (3) de chaque réceptacle (1) est une plaque avec des arêtes repliées vers le bas et/ou repliées vers le haut.

10. Dispositif selon la revendication 9,
**caractérisé en ce que**
la surface d'appui (3) est munie d'une surface supérieure non glissante et/ou de zones de marquage de façon que les réceptacles (1) soient fixés dans une position définie sur la surface de support (3).

11. Dispositif selon l'une quelconque des revendications 1 à 10,
**caractérisé en ce que**
le prolongement (14) du bras (11) de l'un des leviers de charge (7) qui coopère avec l'élément de commutation (4) est muni d'un contrepoids (25) coulissant et qui le cas échéant peut être bloqué.
